# FASCICULE DE BREVET EUROPEEN

(11) **EP 3 906 375 B1**
(45) Date de publication et mention de la délivrance du brevet: **07.06.2023**
(21) Numéro de dépôt: 19835430.0
(22) Date de dépôt: 31.12.2019
(51) Int. Cl.: F16L 1/15, F16L 1/19, F16L 1/23

(54) **PROCÉDÉ DE POSE OU/ET DE RÉCUPÉRATION D'UNE LIGNE FLEXIBLE DANS UNE ÉTENDUE D'EAU ET SYSTÈME ASSOCIÉ**
VERFAHREN ZUR VERLEGUNG UND/ODER RÜCKGEWINNUNG EINER FLEXIBLEN LEITUNG IN EINEM GEWÄSSER UND ZUGEHÖRIGES SYSTEM
METHOD FOR LAYING AND/OR RECOVERING A FLEXIBLE LINE IN A BODY OF WATER AND ASSOCIATED SYSTEM

(30) Priorité: 31.12.2018 FR 1874403
(43) Date de publication de la demande: 10.11.2021
(73) Titulaire: TechnipFMC Subsea France, 92400 Courbevoie (FR)
(72) Inventeur: JEAN, Sebastien, 76113 Hautot sur Seine (FR)
(74) Mandataire: Lavoix
(86) Numéro de dépôt international: PCT/EP2019/087188
(87) Numéro de publication internationale: WO 2020/141172

(56) Documents cités:
- WO-A1-2009/022189
- WO-A2-2012/126908
- FR-A1- 2 792 990

## Description

La présente invention concerne un procédé de pose ou/et de récupération d'une ligne flexible dans une étendue d'eau selon le préambule de la revendication 1.

La ligne flexible est notamment une conduite flexible telle que décrite dans les documents normatifs publiés par l'American Petroleum Institute (API), API 17J « Spécification for Unbonded Flexible Pipe » 4ème Edition Mai 2014, et API RP 17B « Recommended Practice for Flexible Pipe » 5ème Edition Mai 2014. La conduite flexible est par exemple une conduite montante (ou «riser» en anglais) et/ou une conduite posée sur le fond marin (ou « flowline » en anglais).

En variante, la conduite flexible est un faisceau composite de type « bundle », comprenant au moins un tube de transport de fluide et un ensemble de câbles électriques ou optiques propres à transporter une puissance électrique ou hydraulique ou une information entre le fond et la surface de l'étendue d'eau.

En variante encore, la ligne flexible est un ombilical sous-marin décrit dans le document normatif API 17E, ou un câble électrique de puissance.

Pour déployer de telles lignes flexibles, il est connu de les dérouler à partir de moyens de stockage présents sur un système de pose flottant, par exemple décrit dans EP 2 005 050.

Les moyens de stockage sont notamment un panier ou un tambour rotatif.

La ligne est déroulée à partir des moyens de stockage, puis est généralement remontée sur une goulotte portée par la tour du dispositif de pose.

Ensuite, la ligne est engagée dans des ensembles de saisie et de déplacement comprenant des tensionneurs à chenilles. La ligne descend ainsi verticalement ou de manière inclinée le long de la tour, avant de plonger dans l'étendue d'eau.

La ligne est retenue par les moyens tensionneurs qui assurent sa suspension dans l'étendue d'eau. En outre, les moyens tensionneurs supportent la tension mécanique provenant du poids de la ligne déroulée et évitent aux moyens de stockage de subir ce poids, tout en garantissant que la ligne ne subit pas de flexion qui va au-delà de son rayon minimal de courbure en flexion sans endommagement («MBR» ou «Minimal Bending Radius» en anglais).

Pour plonger la ligne dans l'étendue d'eau, un puits vertical est généralement ménagé à travers la coque du navire pour former un passage de descente de la ligne. Un tel puits est désigné par le terme anglais «moon pool».

Plus généralement, la tour du dispositif de pose s'étend verticalement ou de manière inclinée au voisinage de ce puits pour permettre le déploiement de la ligne à travers le passage. En variante, la tour du dispositif de pose est située à l'arrière de la coque.

Dans la plupart des cas, le dispositif de pose comporte de haut en bas sur la tour, au moins un premier groupe de tensionneurs supérieurs et un deuxième groupe de tensionneurs inférieurs.

Les opérations de pose d'une ligne flexible dans une étendue d'eau ne s'effectuent pas de manière totalement continue. En effet, il est parfois nécessaire d'arrêter la pose de la ligne pour effectuer diverses opérations.

Ces opérations incluent par exemple l'installation à intervalles réguliers de bouées autour de la ligne, pour lui donner une configuration en forme de vague.

D'autres opérations incluent des réparations ponctuelles sur la ligne, ou encore des opérations sous-marines en rapport avec la ligne par exemple des connexions/déconnexions, des interventions de véhicules sous-marins téléguidés.

L'arrêt de la pose peut aussi résulter d'une mise en attente, liée par exemple à la météo ou/et à des contraintes imposées par des installations pétrolières avoisinantes.

Pour arrêter temporairement la pose, les tensionneurs sont équipés de systèmes de freins mécaniques qui bloquent l'axe d'au moins un moteur, sur commande de l'unité de commande. Puis, lorsque la pose peut redémarrer, l'unité de commande désactive les freins mécaniques et réactive les tensionneurs.

Un tel procédé de pose ne donne pas entière satisfaction. Si, lors de la pose, la charge s'appliquant sur les tensionneurs supérieurs et sur les tensionneurs inférieurs est à peu près égale, ceci n'est pas le cas lors des phases d'immobilisation de la ligne.

Dès que les freins mécaniques sont activés, la charge s'appliquant sur les tensionneurs inférieurs résultant du poids de la ligne augmente par rapport à la charge s'appliquant sur les tensionneurs supérieurs. Ceci provoque un déséquilibre entre les charges appliquées sur les tensionneurs supérieurs et sur les tensionneurs inférieurs. Ce déséquilibre peut atteindre dans certains cas plus de 10 %.

Pour pallier ce problème, et éviter que les tensionneurs inférieurs soient en surcharge, avec des conséquences possibles sur la sécurité du procédé, il est connu d'appliquer un coefficient de sécurité augmenté par rapport à la tension maximale pouvant être supportée nominalement par les tensionneurs inférieurs.

Une telle solution n'est pas satisfaisante, puisqu'elle nuit à la performance du procédé et à celle des équipements, impliquant par exemple de surdimensionner inutilement les tensionneurs supérieurs ou de dégrader leur capacité nominale, diminuant le poids de la ligne pouvant être posée ou imposant des contraintes météorologiques plus strictes.

FR2967749, WO 2012/126908 et FR2792990 décrivent des procédés selon le préambule de la revendication 1.

Un but de l'invention est donc d'obtenir un procédé de pose utilisant des tensionneurs supérieurs et des tensionneurs inférieurs, le procédé permettant d'effectuer des immobilisations fréquentes de la ligne en cours de pose, tout en évitant un surdimensionnement des équipements, ou un sous-dimensionnement de la ligne à poser.

A cet effet, l'invention a pour objet un procédé selon la revendication 1.

Le procédé selon l'invention peut comprendre l'une ou plusieurs des caractéristiques des revendications 2 à 9.

L'invention a également pour objet un système de pose ou/et de récupération d'une ligne flexible dans une étendue d'eau, selon la revendication 10.

Le système selon l'invention peut comprendre l'une ou plusieurs des caractéristiques des revendications 11 à 15.

L'invention sera mieux comprise à la lecture de la description qui va suivre, donnée uniquement à titre d'exemple, et faite en se référant aux dessins annexes, sur lesquels :
[Fig. 1] la figure 1 est une vue schématique d'un premier système de pose et/ou de récupération selon l'invention ;
[Fig. 2] la figure 2 est un schéma synoptique illustrant le dispositif de pose et l'unité de commande du dispositif dans le système de pose et/ou de récupération selon l'invention ;
[Fig. 3] la figure 3 est une vue schématique d'un tensionneur du dispositif de pose selon l'invention ;
[Fig. 4] la figure 4 est un logigramme illustrant les étapes successives d'un procédé de pose et/ou de récupération selon l'invention ;
[Fig. 5] la figure 5 est un logigramme analogue à la figure 4 pour une variante du procédé de pose ou/et de récupération selon l'invention ;
[Fig. 6] la figure 6 est un logigramme analogue à la figure 4 pour une autre variante du procédé de pose ou/et de récupération selon l'invention.

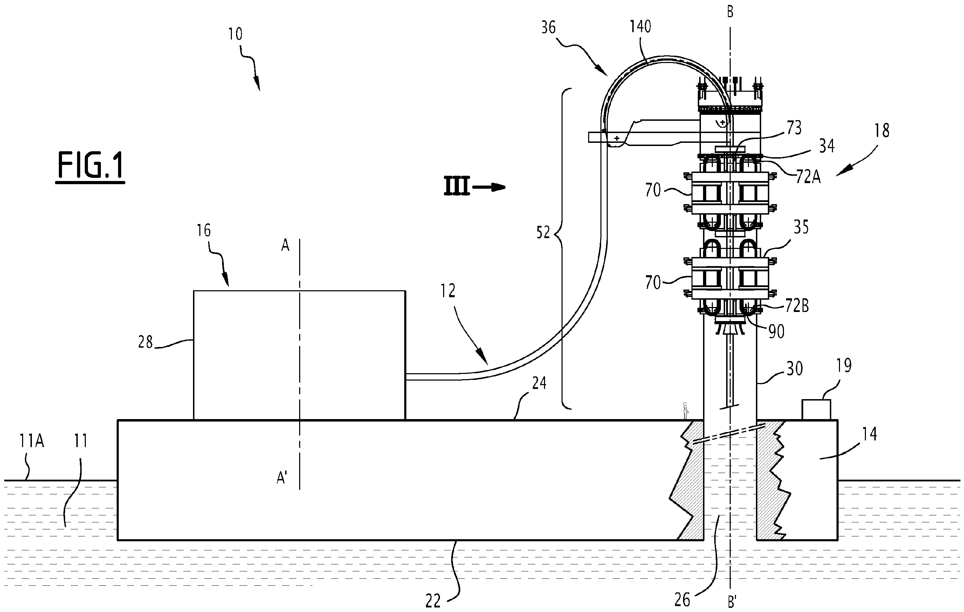

Un premier système 10 de pose ou/et de récupération d'une ligne flexible 12 est représenté sur les Figures 1 à 3.

Dans cet exemple, le système 10 flotte sur une étendue d'eau 11 (visible sur la Figure 1) qui est par exemple une mer, un océan ou un lac. La profondeur de l'étendue d'eau 11 entre la surface 11A et le fond est supérieure à 5 mètres, et est notamment comprise entre 100 mètres et 4000 mètres.

Le système de pose 10 est destiné à la pose ou/et à la récupération d'une ligne flexible 12 qui est avantageusement une conduite flexible.

La conduite flexible est notamment une conduite telle que décrite dans les documents normatifs publiés par l'American Petroleum Institute (API), API 17J, et API RP17B. La conduite est en variante un ombilical tel que décrit dans les documents normatifs publiés par l'American Petroleum Institute (API), API17E ou bien encore une conduite rigide déroulée.

Cette définition englobe indifféremment les conduites flexibles de type non liées (« unbonded « en anglais), ou liées (« bonded » en anglais).

Plus généralement, et en variante, la ligne flexible 12 est un faisceau composite de type « bundle » comprenant au moins un tube de transport de fluide et un ensemble de câbles électriques ou optiques propres à transporter une puissance électrique ou hydraulique ou une information entre le fond et la surface de l'étendue d'eau.

En variante encore, la ligne flexible 12 est un ombilical sous-marin décrit dans le document normatif API 17E, ou un câble électrique de puissance.

La ligne 12 peut porter des équipements, tels que des bouées, des connecteurs ou des équipements de fond qui présentent une étendue transversale supérieure à son étendue transversale moyenne.

En référence à la Figure 1, le système de pose ou/et de récupération 10 comporte une coque 14 flottant sur l'étendue d'eau 11, et un ensemble 16 de stockage de la ligne 12 sur la coque 14.

Il comporte un dispositif de pose ou/et de récupération 18 et une unité de commande 19, montés sur la coque 14.

La coque 14 est par exemple la coque d'un navire comprenant des moyens de propulsion. En variante, la coque 14 est formée par une plateforme flottant sur l'étendue d'eau 11, une barge, ou une barge semi-submersible.

La coque 14 s'étend entre une surface inférieure 22 immergée sous l'étendue d'eau 11 et un pont supérieur 24, à partir duquel le dispositif de pose ou/et de récupération 18 fait saillie.

Le pont 24 est avantageusement situé au-dessus la surface 11A de l'étendue d'eau 11. Dans cet exemple, la coque 14 délimite intérieurement, entre la surface inférieure 22 et la surface supérieure 24, un puits traversant central 26, visible sur la figure 1.

Le puits central 26 s'étend verticalement. Il débouche vers le haut sur le pont 24 et il débouche vers le bas dans l'étendue d'eau 11 à travers la surface inférieure 22.

Lorsque la ligne 12 est une conduite flexible, l'ensemble de stockage 16 est formé par un organe rotatif 28 de stockage de la conduite dans une configuration enroulée. L'organe rotatif 28 est par exemple un tambour avec un axe de rotation horizontal ou un panier avec un axe de rotation vertical.

L'ensemble de stockage 16 est disposé sur le pont 24 ou dans la coque 14.

La rotation de l'organe de stockage 28 dans un premier sens autour de son axe A-A' permet le déroulement d'une longueur croissante de ligne 12 vers le dispositif de pose 18, alors que la rotation dans un deuxième sens opposé au premier sens permet l'enroulement d'une longueur croissante de conduite sur l'organe de stockage 28.

Selon l'invention, le dispositif de pose 18 comporte une tour 30 d'axe vertical B-B', définissant un axe de tour, au moins un ensemble supérieur 34 de saisie et de déplacement de la ligne 12, et au moins un ensemble inférieur 35 de saisie et de déplacement de la ligne 12, les ensembles 34, 35 étant portés par la tour 30.

Le dispositif de pose 18 comporte en outre un ensemble 36 de guidage du déplacement de la ligne 12 entre l'ensemble de stockage 16 et les ensembles de saisie et de déplacement 34, 35.

Chaque ensemble 34, 35 comporte un châssis 70 de support et au moins deux mécanismes de saisie. Les mécanismes de saisie sont ici des tensionneurs à chenilles 72A, 72B portés par le châssis 70. Dans ce qui suit, le terme « tensionneur » doit s'entendre comme synonyme de « mécanisme de saisie ».

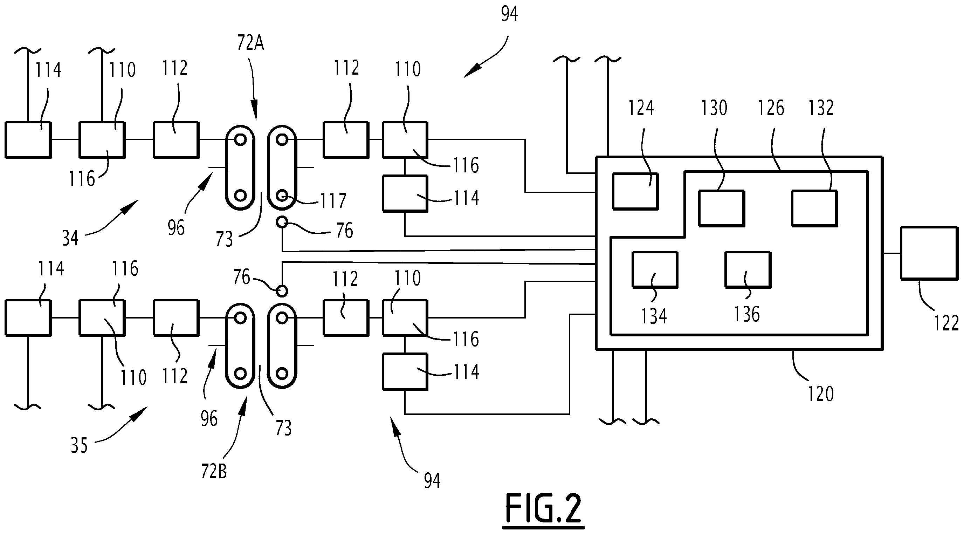

Chaque ensemble 34, 35 comporte en outre un capteur 76 de mesure d'une information représentative de la charge appliquée par la ligne 12 sur le tensionneur 72A, 72B (visibles sur la figure 2).

Chaque châssis 70 est propre à être déplacé entre une configuration ouverte de de mise en place de la ligne 12 dans le châssis et une configuration fermée d'utilisation.

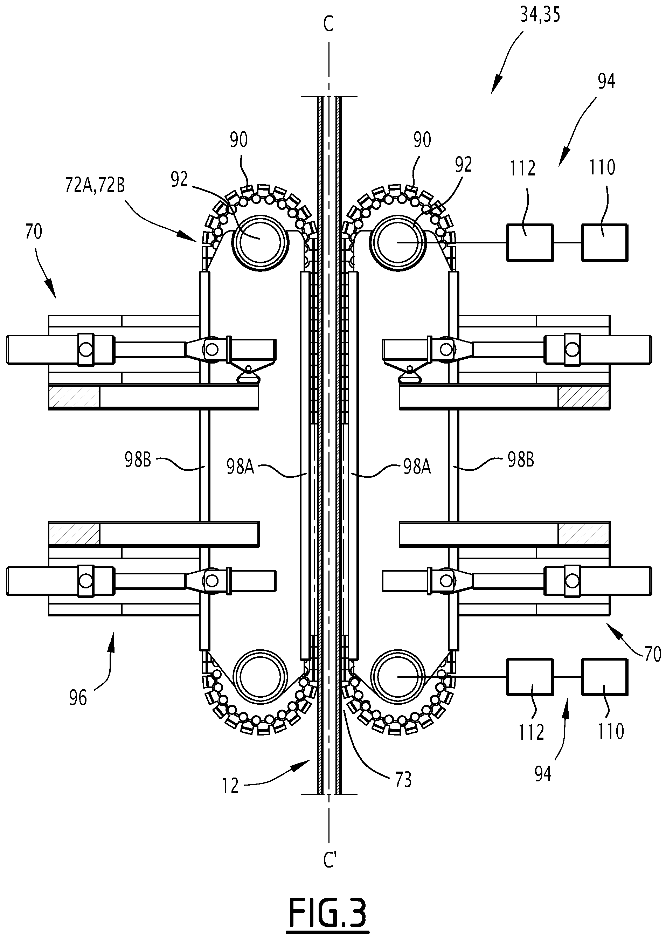

Dans la configuration fermée, en référence à la figure 3, chaque châssis 70 délimite un passage central 73 s'étendant verticalement le long d'un axe C-C' définissant un axe de pose de la ligne 12. Cet axe de pose C-C' est sensiblement parallèle à l'axe B-B' de la tour 30, c'est-à-dire totalement parallèle ou incliné d'un angle inférieur par exemple à 10° par rapport à l'axe B-B'.

En référence aux Figures 2 et 3, chaque châssis 70 porte avantageusement deux tensionneurs 72A, 72B disposés sensiblement parallèlement l'un par rapport à l'autre

Chaque tensionneur 72A, 72B fait saillie dans le passage 73 vers l'axe C-C'.

Le tensionneur 72A, 72B comporte un organe de déplacement 90, formé par une chenille de guidage destinée à saisir et déplacer la ligne 12, deux roues dentées 92, sur lesquelles est enroulé l'organe de déplacement 90, un dispositif 94 d'entraînement de l'organe de déplacement 90 le long de l'axe B-B', et un mécanisme 96 de déplacement radial de chaque organe de déplacement 90 vers l'axe B-B'.

L'organe de déplacement 90 présente sensiblement une forme de bande sans fin enroulée sur deux roues dentées 92. Elle présente ainsi une partie longitudinale 98A de guidage de la conduite et une partie longitudinale 98B de retour, destinées à s'étendre parallèlement à l'axe C-C' de pose.

La partie de guidage 98A est destinée à entrer en contact avec la surface périphérique extérieure de la ligne 12, le long d'une génératrice. Dans la configuration fermée les sections de guidage 98A opposées de deux tensionneurs 72 en regard se font face et sont propres à saisir respectivement deux sections angulaires opposées de la ligne 12 par rapport à l'axe C-C'.

Les roues dentées 92 sont mobiles en rotation autour d'un axe perpendiculaire à l'axe C-C'. Ils sont entraînés en rotation autour de leur axe par le dispositif 94, pour entraîner le déplacement des parties 98A, 98B parallèlement à l'axe C-C'.

En référence à la figure 2, chaque dispositif d'entraînement 94 comporte un moteur 110, pilotable par l'unité de commande 19, avantageusement un moto réducteur 112, raccordant le moteur 110 à au moins une roue dentée 92 et un frein mécanique 114 de blocage du moteur 110.

Le dispositif d'entraînement 94 comporte avantageusement un capteur 116 de mesure de couple appliqué par chaque moteur 110, et/ou un capteur 117 de mesure de vitesse de déplacement de la ligne 12.

Le moteur 110 est par exemple un moteur hydraulique ou un moteur électrique. Il est propre à engendrer un couple variable en fonction de la configuration souhaitée. Le couple variable est choisi parmi un couple de retenue de la ligne 12 dans une configuration immobile ou quasi immobile de la ligne 12, et un couple de déplacement de la ligne 12 à travers le passage central 73 dans une configuration de déplacement de la ligne 12.

Le frein mécanique 114 est également pilotable par l'unité de commande 19 entre une position désengagée, dans laquelle le moteur 110 est libre d'entrainer en rotation les roues dentées 92 et une position engagée dans laquelle il est apte à immobiliser le moteur 110 et/ou chaque roue dentée 92 pour retenir statiquement la ligne 12, même en l'absence de couple appliqué par le moteur 110.

Le mécanisme de déplacement radial 96 comporte par exemple au moins un vérin propre à déplacer radialement chaque organe de déplacement 90 vers l'axe de pose C-C', afin d'appliquer une force déterminée sur la surface périphérique extérieure de la ligne 12.

L'unité de commande 19 est représentée schématiquement sur les figures 1 et 2. Elle comporte par exemple un calculateur 120 et une interface homme-machine 122.

Le calculateur 120 comporte un processeur 124 et une mémoire 126 propre à contenir des modules logiciels fonctionnels destinés à être exécutés par le calculateur 124. En variante, les modules fonctionnels sont réalisés au moins partiellement sous forme de composants logiques programmables, ou encore sous forme de circuits intégrés dédiés.

Dans cet exemple, la mémoire 126 contient un module 130 d'activation sélectif de chaque moteur 110, un module 132 de régulation de chaque moteur 110 en vitesse ou en couple, raccordé à chaque capteur 116, 117, et avantageusement, un module 134 d'activation du frein mécanique 114.

Elle contient selon l'invention, un module 136 de pilotage des modules 130, 132, 134 entre une configuration de repos, une configuration de pose ou/et de récupération de la ligne 12, une configuration de quasi-immobilisation de la ligne 12 et une configuration d'immobilisation de la ligne 12.

Dans la configuration de repos, le module d'activation 130 désactive chaque moteur 110 et le module d'activation 134 active au moins un frein mécanique 114.

Dans la configuration de pose ou/et de récupération, le module d'activation 134 désactive chaque frein mécanique 114. Le module d'activation 130 active chaque moteur 110 et le module de régulation 132 pilote chaque moteur 110 en couple, ou/et en vitesse sur la base des informations reçues d'au moins un capteur 116, 117 pour atteindre une vitesse de pose ou/et de récupération, supérieure à 2 m/heure, notamment comprise entre 2 m/heure et 2000 m/heure.

Dans la configuration de quasi-immobilisation, le module d'activation 134 désactive chaque frein mécanique 114 et active chaque moteur 110.

Le module de régulation 132 pilote simultanément au moins un moteur 110 d'un tensionneur supérieur 72A et au moins un moteur 110 d'un tensionneur inférieur 72B pour engendrer un déplacement continu des organes de déplacement 90 de la ligne 12, provoquant un mouvement continu de la ligne 12 à travers chaque passage de circulation 73, à une vitesse inférieure à 1 m/heure.

Dans la configuration d'immobilisation, le module de pilotage 136 pilote les modules 132 et 134 pour réaliser une succession d'intervalles de maintien immobile de la ligne 12, dans laquelle les moteurs 110 d'au moins un tensionneur supérieur 72A et d'au moins un tensionneur inférieur 72B appliquent un couple de retenue sur la ligne 12 sans déplacement d'un organe de retenue 90 et d'intervalles de régulation de charge dans lequel un moteur 110 d'un tensionneur supérieur 72A ou d'un tensionneur supérieur 72B est actif pour engendrer un déplacement limité d'un organe de déplacement 90 d'un tensionneur inférieur 72A ou/et d'un tensionneur supérieur 72B ou une modification du couple de retenue appliqué sur un organe de déplacement 90 d'un tensionneur inférieur 72A ou/et d'un tensionneur supérieur 72B.

De préférence, le module de pilotage 136 mesure régulièrement une information représentative d'une différence entre la charge appliquée sur au moins un tensionneur supérieur 72A et la charge appliquée sur au moins un tensionneur inférieur 72B à l'aide des capteurs 76, et déplace un organe de déplacement 90 du tensionneur inférieur 72B ou/et du tensionneur supérieur 72A par le moteur 110, ou modifier le couple appliqué sur un organe de déplacement 90 du tensionneur inférieur 72B ou/et du tensionneur supérieur 72A par le moteur 110 en fonction de l'information représentative mesurée.

En particulier, si la différence de charge précitée atteint un seuil prédéterminé, le module de pilotage 136 active le moteur 110 d'un tensionneur inférieur 72B pour déplacer un organe de déplacement 90 du tensionneur inférieur 72B ou modifier le couple de retenue appliqué sur l'organe de déplacement 90 du tensionneur inférieur 72B jusqu'à ce que la différence de charge mesurée soit inférieure ou égale au seuil prédéterminé.

L'interface homme-machine 122 comporte par exemple un organe de commande, notamment un joystick ou/et un écran tactile, et un afficheur pour permettre le basculement de l'unité de commande 19 entre la configuration de repos, la configuration de pose ou/et de récupération, la configuration de quasi-immobilisation et la configuration d'immobilisation de la ligne 12. Elle est propre à permettre à l'utilisateur de sélectionner une vitesse de pose ou/et de récupération de la ligne 12 dans la configuration de pose et/ou de récupération.

En référence à la figure 1, l'ensemble de guidage 34 comporte au moins une goulotte 140 de guidage courbée ou une roue disposée au dessus de la tour 30 pour rediriger la ligne flexible 12 prélevée de l'ensemble de stockage 16 dans l'axe de la tour 30.

La goulotte 140 présente sensiblement une forme de U tournée vers le bas définissant un rayon de courbure adéquat pour la ligne 12. Ce rayon de courbure est supérieur au rayon de courbure minimal (MBR) de la ligne 12.

Un procédé de pose de la ligne 12, mis en oeuvre à l'aide du système 10, va maintenant être décrit.

Initialement, la ligne flexible 12 est stockée dans l'ensemble de stockage 16 en étant enroulée sur l'organe rotatif 28.

La ligne 12 conserve ainsi un rayon de courbure adéquat supérieur à son MBR.

Le système 10 est alors déplacé sur l'étendue d'eau 11 jusqu'à une région de pose dans laquelle la ligne 12 doit être déployée.

Les châssis 70 respectifs des ensembles de saisie et de déplacement 34, 35 sont ouverts au moins partiellement.

Une extrémité de la ligne 12 est alors amenée au contact de la goulotte 140 en l'engageant sur celle-ci.

Puis, un tronçon de ligne 12 est déployé successivement sur la goulotte 140, puis est descendu à travers chaque châssis 70 pour s'étendre verticalement le long de l'axe C-C'.

Ensuite, les châssis 70 sont passés dans leur position fermée.

Les mécanismes 96 de déplacement radial des organes de déplacement 90 sont alors activés pour appliquer chaque partie longitudinale de guidage 98A contre la surface périphérique extérieure de la ligne 12 suivant une génératrice de celle-ci.

Les mécanismes de déplacement radial 96 sont par ailleurs pilotés pour appliquer une pression prédéterminée sur la ligne 12.

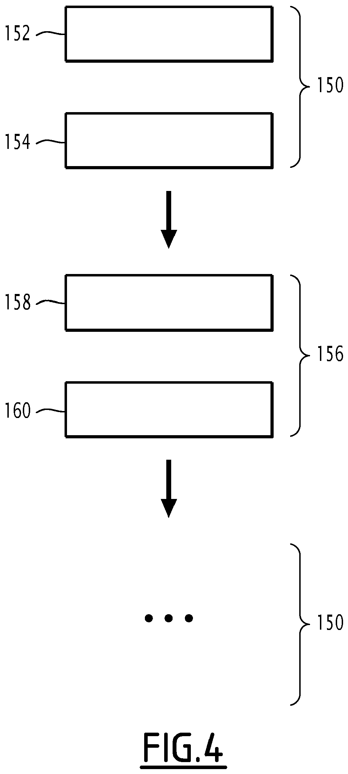

En référence à la figure 4, une phase 150 de pose est alors effectuée. Lors de cette phase 150, l'unité de commande 19 passe dans sa configuration de pose. Elle active les moteurs 110 à l'étape 152, et pilote les moteurs à l'étape 154 pour développer un couple de déplacement de l'organe de déplacement 90. Ceci engendre un mouvement continu de la ligne 12 à travers les passages de circulation 73, régulé à une vitesse de déplacement supérieure à 2 m/heure, notamment comprise entre 2 m/heure et 2000 m/heure.

Le dispositif 94 d'entraînement en rotation des roues dentées 92 est activé. Les organes de déplacement 90 sont entraînés en mouvement, de sorte que chaque partie longitudinale 98A se déplace de haut en bas en entrainant la ligne 12. La ligne 12 est ainsi entraînée en translation le long de l'axe de pose C-C' par les organes de déplacement 90 des tensionneurs 72A, 72B en regard de chaque ensemble 34, 35.

Une longueur croissante de ligne 12 peut ainsi être déployée, avec une tension contrôlée, par l'intermédiaire des ensembles de saisie et de guidage 34A, 34B.

Dans un premier procédé selon l'invention, illustré par la figure 4, lorsque la pose doit être interrompue, par exemple pour l'installation d'une bouée, pour une réparation de ligne, pour effectuer des activités sous l'eau, par exemple pour une connexion, ou pour un arrêt, une phase de quasi-immobilisation 156 est alors mise en oeuvre.

Dans cette phase de quasi-immobilisation 156, l'unité de commande 19 passe dans la configuration de quasi-immobilisation à l'étape 158.

Elle active et pilote simultanément au moins un moteur 110 d'un tensionneur supérieur 72A et au moins un moteur 110 d'un tensionneur inférieur 72B (étape 160), pour engendrer un déplacement continu des organes de déplacement 90 provoquant un mouvement continu de la ligne 12 à travers chaque passage de circulation 73, à une vitesse inférieure à 1 m/heure notamment inférieure à 0,25 m/heure.

Le pilotage simultané 160 comporte avantageusement la mesure d'une information représentative d'une différence entre la charge appliquée par la ligne 12 sur au moins un tensionneur supérieur 72A et la charge appliquée sur la ligne 12 par au moins un tensionneur inférieur 72B à l'aide des capteurs 76.

Le pilotage simultané 160 comporte la commande sélective d'au moins un moteur 110 d'un tensionneur supérieur 72A et d'au moins un moteur 110 d'un tensionneur inférieur 72B en fonction de la différence de charge mesurée, pour maintenir la différence de charge inférieure à un seuil déterminé.

Lors de la phase de quasi-immobilisation, le déplacement de la ligne 12 est imperceptible pour les opérateurs intervenant autour de la ligne 12. Les opérations sur la ligne peuvent donc être effectuées normalement.

Cependant, même si la ligne 12 est quasiment immobilisée, la différence de charge s'appliquant entre les tensionneurs supérieurs 72A et les tensionneurs inférieurs 72B reste très faible, du fait de la régulation, assurant un équilibre de charge entre les tensionneurs 72.

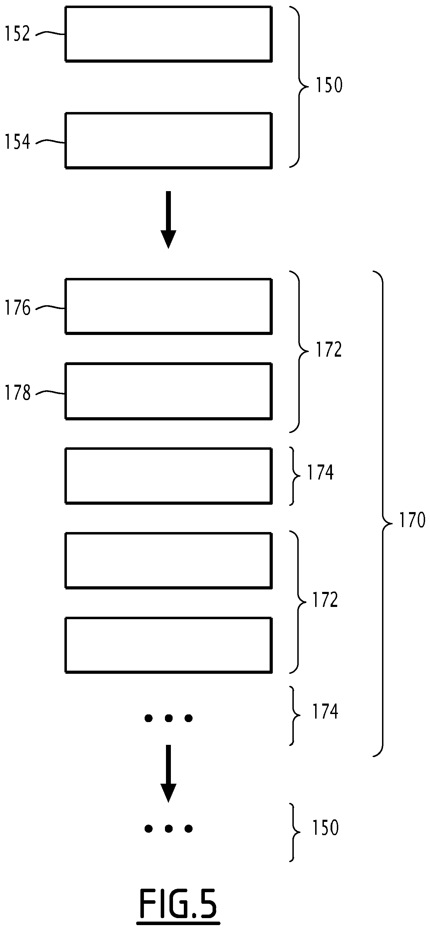

Le deuxième procédé illustré par la figure 5 diffère du procédé illustré par la figure 4 en ce qu'il comporte au moins une phase 170 d'immobilisation de la ligne 12.

La phase d'immobilisation 170 comporte une succession d'intervalles 172 de maintien immobile de la ligne 12, et d'intervalles de régulation de charge 174.

Dans chaque intervalle de maintien 172, les freins mécaniques 114 de tous les tensionneurs 72A, 72B sont désactivés. Les moteurs 110 des tensionneurs supérieurs 72A et des tensionneurs inférieurs 72B restent actifs (étape 176). Ils appliquent chacun un couple de retenue de la ligne 12, sans déplacement des organes de retenue 90 (étape 178). La ligne 12 est retenue à l'encontre de son poids et est maintenue immobile par rapport aux tensionneurs 72A, 72B exclusivement par les moteurs 110.

L'unité de commande 19 mesure régulièrement une information représentative d'une différence entre la charge appliquée par la ligne 12 sur au moins un tensionneur supérieur 72A et la charge appliquée sur la ligne 12 par au moins un tensionneur inférieur 72B à l'aide des capteurs 76.

Lorsque la différence passe au-dessus d'un seuil prédéterminé, un intervalle de régulation 174 est exécuté par l'unité de commande 19.

Dans chaque intervalle de régulation 174, un moteur 110 de l'un d'un tensionneur supérieur 72A ou d'un tensionneur inférieur 72B est activé pour engendrer un déplacement d'un organe de déplacement 90 du tensionneur supérieur 72A ou du tensionneur inférieur 72B. Le moteur 110 de l'autre du tensionneur supérieur 72A ou du tensionneur inférieur 72B reste actif, mais sans déplacement de son organe de déplacement 90.

De préférence, le moteur d'au moins un tensionneur inférieur 72B est activé pour engendrer un déplacement de l'organe de déplacement 90 du tensionneur inférieur 72B. Le moteur 110 de chaque tensionneur supérieur 72A reste actif pour appliquer sur l'organe de déplacement 90 du tensionneur supérieur 72A un couple de retenue de la ligne 12 à l'encontre de son poids, mais sans déplacement de l'organe de déplacement 90 du tensionneur supérieur 72A.

Le déplacement de l'organe de déplacement du tensionneur inférieur 72A par le moteur 110 est alors piloté en fonction de l'information représentative mesurée pour que la différence entre la charge appliquée par la ligne 12 sur au moins un tensionneur supérieur 72A et la charge appliquée sur la ligne 12 par au moins un tensionneur inférieur 72B, mesurée à l'aide des capteurs 76, passe en dessous du seuil prédéterminé.

En variante, dans chaque intervalle de régulation 174, un moteur 110 de l'un d'un tensionneur supérieur 72A ou d'un tensionneur inférieur 72B est activé pour engendrer une modification du couple de retenue appliqué sur un organe de déplacement 90 du tensionneur supérieur 72A ou du tensionneur inférieur 72B, sans déplacement du tensionneur supérieur 72A ou du tensionneur inférieur 72B. Le moteur 110 de l'autre du tensionneur supérieur 72A ou du tensionneur inférieur 72B reste actif, mais sans modification du couple appliqué sur son organe de déplacement 90 et sans déplacement du tensionneur supérieur 72A ou du tensionneur inférieur 72B.

De préférence, le moteur d'au moins un tensionneur inférieur 72B est activé pour engendrer une modification du couple appliqué sur l'organe de déplacement 90 du tensionneur inférieur 72B. Le moteur 110 de chaque tensionneur supérieur 72A reste actif pour appliquer sur l'organe de déplacement 90 du tensionneur supérieur 72A le même couple de retenue de la ligne 12 à l'encontre de son poids, sans déplacement de l'organe de déplacement 90 du tensionneur supérieur 72A.

Le couple appliqué sur l'organe de déplacement du tensionneur inférieur 72A par le moteur 110 est alors piloté en fonction de l'information représentative mesurée pour que la différence entre la charge appliquée par la ligne 12 sur au moins un tensionneur supérieur 72A et la charge appliquée sur la ligne 12 par au moins un tensionneur inférieur 72B, mesurée à l'aide des capteurs 76, passe en dessous du seuil prédéterminé.

Ensuite, un nouvel intervalle de maintien 172 se produit.

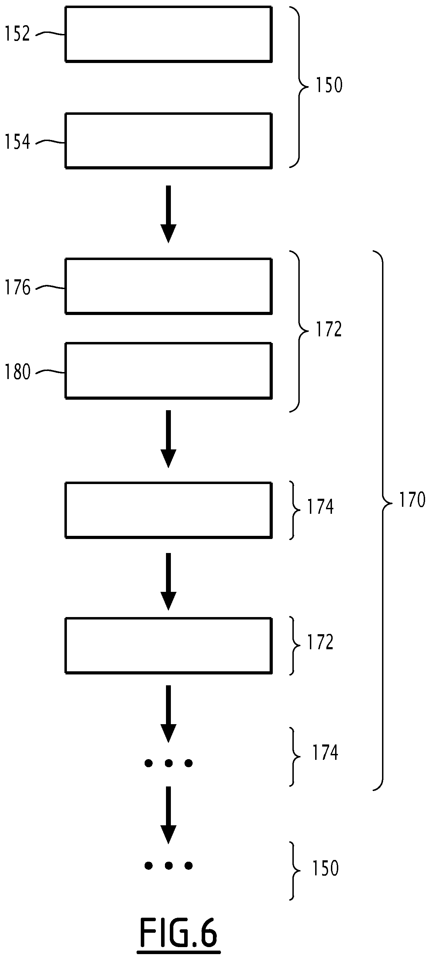

Le troisième procédé illustré sur la figure 6 diffère du deuxième procédé illustré sur la figure 5 en ce que lors de la phase d'immobilisation 170, un frein mécanique 114 est appliqué en permanence sur au moins un tensionneur supérieur 72A pour immobiliser le tensionneur supérieur 72A (étape 180).

Lors de chaque intervalle de régulation 174, le moteur 110 d'au moins un tensionneur inférieur 72B est activé pour engendrer un déplacement d'un organe de déplacement 90 du tensionneur inférieur 72B.

Comme précédemment, le procédé comporte la mesure d'une information représentative d'une différence entre la charge appliquée par la ligne 12 sur au moins un tensionneur supérieur 72A et la charge appliquée sur la ligne 12 par au moins un tensionneur inférieur 72B à l'aide des capteurs 76.

Lorsque la différence passe au-dessus d'un seuil prédéterminé, un intervalle de régulation est exécuté par l'unité de commande 19.

Le procédé comporte alors l'activation d'au moins un tensionneur inférieur 72B pour engendrer un déplacement de l'organe de déplacement 90 du tensionneur inférieur 72B. Comme précédemment, le déplacement de l'organe de déplacement du tensionneur inférieur 72A par le moteur 110 est alors piloté en fonction de l'information représentative mesurée pour que la différence entre la charge appliquée par la ligne 12 sur au moins un tensionneur supérieur 72A et la charge appliquée sur la ligne 12 par au moins un tensionneur inférieur 72B, mesurée à l'aide des capteurs 76, passe en dessous du seuil prédéterminé.

Le frein 114 du tensionneur supérieur 72A reste actif pendant l'intervalle de régulation 174.

En variante, lors de chaque intervalle de régulation 174, le moteur 110 d'au moins un tensionneur inférieur 72B est activé pour modifier le couple appliqué sur un organe de déplacement 90 du tensionneur inférieur 72B, sans déplacement de l'organe de déplacement 90 du tensionneur inférieur 72B.

Comme précédemment, le procédé comporte la mesure d'une information représentative d'une différence entre la charge appliquée par la ligne 12 sur au moins un tensionneur supérieur 72A et la charge appliquée sur la ligne 12 par au moins un tensionneur inférieur 72B à l'aide des capteurs 76.

Lorsque la différence passe au-dessus d'un seuil prédéterminé, un intervalle de régulation est exécuté par l'unité de commande 19.

Le procédé comporte alors l'activation d'au moins un moteur 110 d'un tensionneur inférieur 72B pour engendrer une modification du couple de retenue appliqué sur l'organe de déplacement 90 du tensionneur inférieur 72B. Comme précédemment, le couple appliqué sur l'organe de déplacement du tensionneur inférieur 72B par le moteur 110 est alors piloté en fonction de l'information représentative mesurée pour que la différence entre la charge appliquée par la ligne 12 sur au moins un tensionneur supérieur 72A et la charge appliquée sur la ligne 12 par au moins un tensionneur inférieur 72B, mesurée à l'aide des capteurs 76, passe en dessous du seuil prédéterminé.

Le frein 114 du tensionneur supérieur 72A reste actif pendant l'intervalle de régulation 174.

En variante encore, lors de la phase d'immobilisation 174 un frein mécanique 114 est appliqué en permanence sur au moins un tensionneur inférieur 72B pour immobiliser le tensionneur inférieur 72B. Lors de chaque intervalle de régulation 174, le moteur 110 d'au moins un tensionneur supérieur 72A est activé pour engendrer un déplacement d'un organe de déplacement 90 du tensionneur supérieur 72A ou une modification du couple appliqué sur l'organe de déplacement 90 du tensionneur supérieur 72A sans déplacement du tensionneur supérieur 72A.

Comme le premier procédé selon l'invention, le deuxième et le troisième procédé selon l'invention permettent d'immobiliser la ligne 12 pour effectuer des opérations sur celle-ci, sans engendrer de différence de charge substantielle s'appliquant entre les tensionneurs.

Ceci permet d'utiliser les tensionneurs 72A, 72B à leur pleine capacité, et donc d'augmenter la masse des lignes 12 déposées, ou au contraire de ne pas avoir à surdimensionner les tensionneurs 72A, 72B.

Les deuxième et troisième procédés selon l'invention conduisent en outre à une immobilisation totale de la ligne 12 permettant des interventions en toute sûreté, limitant les risques pour le personnel intervenant sur la ligne.

## Revendications

1. Procédé de pose ou/et de récupération d'une ligne flexible (12) dans une étendue d'eau (11), comprenant :
- fourniture d'un dispositif de pose (18) comprenant une paire de tensionneurs supérieurs (72A) et une paire de tensionneurs inférieurs (72B), chaque paire de tensionneurs (72A ; 72B) définissant un passage (73) de circulation de la ligne (12) dans lequel la ligne (12) est localement enserrée ; chaque tensionneur (72A ; 72B) comprenant un organe de déplacement (90) de la ligne (12) et au moins un moteur (110) de mise en mouvement de l'organe de déplacement (90) activable pour développer un couple de déplacement de la ligne (12) ;
- une unité (19) de commande de chaque moteur (110),
le procédé comprenant :
au moins une phase de pose et ou/et de récupération dans laquelle l'unité de commande (19) active le moteur (110) d'au moins un tensionneur (72A ; 72B) et développe un couple de déplacement engendrant un mouvement continu de la ligne (12) à travers chaque passage de circulation (73) ;
- au moins une phase de quasi-immobilisation ou d'immobilisation de la ligne ;
**caractérisé en ce que** la ou chaque phase de quasi-immobilisation ou d'immobilisation de la ligne comporte les étapes suivantes :
- activation du moteur d'au moins un tensionneur supérieur (72A) ou/et d'au moins un tensionneur inférieur (72B) par l'unité de commande (19), pour appliquer sur l'organe de déplacement du tensionneur supérieur (72A) ou/et du tensionneur inférieur (72B), un couple de retenue de la ligne (12) à l'encontre de son poids par la paire de tensionneurs supérieurs (72A) ou/et par la paire de tensionneurs inférieurs (72B),
- pilotage au moins ponctuel par l'unité de commande (19) d'au moins un moteur (110) d'un tensionneur supérieur (72A) ou/et d'un tensionneur inférieur (72B) pour engendrer un déplacement d'un organe de déplacement (90) du tensionneur supérieur (72A) ou/et du tensionneur inférieur (72B) ou pour modifier le couple de retenue appliqué sur l'organe de déplacement (90) du tensionneur supérieur (72A) ou/et du tensionneur inférieur (72B) sans déplacement de l'organe de déplacement (90) du tensionneur supérieur (72A) ou/et du tensionneur inférieur (72B).

2. Procédé selon la revendication 1, comprenant au moins une phase de quasi-immobilisation de la ligne (12) dans laquelle l'unité de commande (19) pilote simultanément au moins un moteur (110) d'un tensionneur supérieur (72A) et au moins un moteur (110) d'un tensionneur inférieur (72B) pour engendrer un déplacement continu des organes de déplacement (90) de la ligne (12) provoquant un mouvement continu de la ligne (12) à travers chaque passage de circulation (73) à une vitesse inférieure à 1 m/heure.

3. Procédé selon la revendication 2, dans lequel dans la phase de pose ou/et de récupération de la ligne (12), le mouvement continu de la ligne (12) est supérieur à 1,5 m/heure.

4. Procédé selon la revendication 2 ou 3, dans lequel le pilotage simultané d'au moins un moteur (110) d'un tensionneur supérieur (72A) et d'au moins un moteur (110) d'un tensionneur inférieur (72B) pour engendrer un déplacement continu des organes de déplacement (90) de la ligne (12) comporte une mesure d'une information représentative d'une différence entre la charge appliquée sur au moins un tensionneur supérieur (72A) et la charge appliquée sur au moins un tensionneur inférieur (72B) et la commande sélective d'au moins un moteur (110) d'un tensionneur supérieur (72A) et d'au moins un moteur (110) d'un tensionneur inférieur (72B) en fonction de la différence de charge mesurée.

5. Procédé selon l'une quelconque des revendications précédentes, comprenant au moins une phase d'immobilisation de la ligne (12), la phase d'immobilisation de la ligne (12) comportant une succession d'intervalles de maintien (172) immobile de la ligne (12), dans lesquels les moteurs (110) d'au moins un tensionneur supérieur (72A) et d'au moins un tensionneur inférieur (72B) appliquent le couple de retenue sur la ligne (12) sans déplacement d'un organe de déplacement (90) et d'intervalles de régulation (174) de charge dans lesquels un moteur (110) d'un tensionneur supérieur (72A) ou d'un tensionneur supérieur (72A) est actif pour engendrer un déplacement d'un organe de déplacement (90) du tensionneur inférieur (72B) ou/et du tensionneur supérieur (72A) ou une modification du couple de retenue appliqué sur l'organe de déplacement (90) du tensionneur supérieur (72A) ou/et du tensionneur inférieur (72B) sans déplacement de l'organe de déplacement (90) du tensionneur supérieur (72A) ou/et du tensionneur inférieur (72B).

6. Procédé selon la revendication 5, dans lequel lors de chaque intervalle de régulation (174), le moteur (110) d'au moins un tensionneur inférieur (72B) est activé pour pour engendrer un déplacement d'un organe de déplacement (90) du tensionneur inférieur (72B) ou une modification du couple de retenue appliqué sur l'organe de déplacement (90) du tensionneur inférieur (72B) sans déplacement du tensionneur inférieur (72B), le moteur (110) de chaque tensionneur supérieur (72A) étant activé pour appliquer sur l'organe de déplacement (90) du tensionneur supérieur (72A) un couple de retenue de la ligne (12) à l'encontre de son poids sans déplacement de l'organe de déplacement (90) du tensionneur supérieur (72A).

7. Procédé selon la revendication 5, dans lequel, lors de la phase d'immobilisation (174) un frein mécanique est appliqué en permanence sur au moins un tensionneur supérieur (72A) pour immobiliser le tensionneur supérieur (72A), et dans lequel, lors de chaque intervalle de régulation (174), le moteur (110) d'au moins un tensionneur inférieur (72B) est activé pour engendrer un déplacement d'un organe de déplacement (90) du tensionneur inférieur (72B) ou une modification du couple appliqué sur l'organe de déplacement (90) du tensionneur inférieur (72B) sans déplacement du tensionneur inférieur (72B),
ou dans lequel, lors de la phase d'immobilisation (174) un frein mécanique est appliqué en permanence sur au moins un tensionneur inférieur (72B) pour immobiliser le tensionneur inférieur (72B), et dans lequel, lors de chaque intervalle de régulation (174), le moteur (110) d'au moins un tensionneur supérieur (72A) est activé pour engendrer un déplacement d'un organe de déplacement (90) du tensionneur supérieur (72A) ou une modification du couple appliqué sur l'organe de déplacement (90) du tensionneur supérieur (72A) sans déplacement du tensionneur supérieur (72A).

8. Procédé selon l'une quelconque des revendications 5 à 7, comprenant la mesure d'une information représentative d'une différence entre la charge appliquée sur au moins un tensionneur supérieur (72A) et la charge appliquée sur au moins un tensionneur inférieur (72B), le déplacement d'un organe de déplacement (90) du tensionneur inférieur (72B) ou/et du tensionneur supérieur (72A) par le moteur (110) lors de chaque intervalle de régulation (174) ou le couple appliqué sur l'organe de déplacement (90) du tensionneur inférieur (72B) ou/et du tensionneur supérieur (72A) par le moteur (110) lors de chaque intervalle de régulation (174) étant piloté en fonction de l'information représentative.

9. Procédé selon la revendication 7 ou 8, dans lequel le déplacement d'un organe de déplacement (90) du tensionneur inférieur (72B) ou/et du tensionneur supérieur (72A) par le moteur (110) lors de chaque intervalle de régulation (174) ou la modification du couple de retenue appliqué sur l'organe de déplacement (90) du tensionneur supérieur (72A) ou/et du tensionneur inférieur (72B) sont effectués lorsque la différence de charge dépasse un premier seuil prédéfini et étant stoppé lorsque la différence de charge passe en dessous d'un deuxième seuil prédéfini, avantageusement inférieur ou égal au premier seuil prédéfini.

10. Système (10) de pose ou/et de récupération d'une ligne (12) flexible dans une étendue d'eau (11), comprenant :
- un dispositif de pose (18) comprenant une paire de tensionneurs supérieurs (72A) et une paire de tensionneurs inférieurs (72B), chaque paire de tensionneurs (72A ; 72B) définissant un passage de circulation (73) de la ligne (12) dans lequel la ligne (12) est localement enserrée ;
chaque tensionneur (72A ; 72B) comprenant un organe de déplacement (90) de la ligne (12) et au moins un moteur (110) de mise en mouvement de l'organe de déplacement (90) activable pour développer un couple de déplacement de la ligne (12) ;
- une unité de commande de chaque moteur (110) propre à exécuter :
- au moins une phase de pose et ou/et de récupération dans laquelle l'unité de commande active le moteur (110) d'au moins un tensionneur (72A ; 72B) et développe un couple de déplacement engendrant un mouvement continu de la ligne (12) à travers chaque passage de circulation (73) ;
- au moins une phase de quasi-immobilisation ou d'immobilisation de la ligne (12) ;
**caractérisé en ce que**, lors de la ou chaque phase de quasi-immobilisation ou d'immobilisation de la ligne (12) , l'unité de commande est propre à :
- activer un moteur (110) d'au moins un tensionneur supérieur (72A) ou/et d'au moins un tensionneur inférieur (72B), pour appliquer sur l'organe de déplacement (90) du tensionneur supérieur (72A) ou/et du tensionneur inférieur (72B), un couple de retenue de la ligne (12) à l'encontre de son poids par la paire de tensionneurs supérieurs (72A) ou/et par la paire de tensionneurs inférieurs (72B),
- piloter au moins ponctuellement au moins un moteur (110) d'un tensionneur supérieur (72A) ou/et d'un tensionneur inférieur (72B) pour engendrer un déplacement d'un organe de déplacement (90) du tensionneur supérieur (72A) ou/et du tensionneur inférieur (72B) ou pour modifier le couple de retenue appliqué sur l'organe de déplacement (90) du tensionneur supérieur (72A) ou/et du tensionneur inférieur (72B) sans déplacement de l'organe de déplacement (90) du tensionneur supérieur (72A) ou/et du tensionneur inférieur (72B).

11. Système (10) selon la revendication 10, dans lequel l'unité de commande (19) est propre à exécuter une phase de quasi-immobilisation de la ligne (12) dans laquelle l'unité de commande (19) pilote simultanément au moins un moteur (110) d'un tensionneur supérieur (72A) et au moins un moteur (110) d'un tensionneur inférieur (72B) pour engendrer un déplacement continu des organes de déplacement (90) de la ligne (12) provoquant un mouvement continu de la ligne (12) à travers chaque passage de circulation (73) à une vitesse inférieure à 1 m/heure.

12. Système (10) selon la revendication 10, dans lequel l'unité de commande (19) est propre à exécuter au moins une phase d'immobilisation de la ligne (12), la phase d'immobilisation de la ligne (12) comportant une succession d'intervalles (172) de maintien immobile de la ligne (12) dans lesquels les moteurs (110) d'au moins un tensionneur supérieur (72A) et d'au moins un tensionneur inférieur (72B) appliquent le couple de retenue sur la ligne (12) sans déplacement d'un organe de retenue (190) et d'intervalles de régulation (174) de charge dans lesquels un moteur (110) d'un tensionneur supérieur (72A) ou d'un tensionneur supérieur (72A) est actif pour engendrer un déplacement d'un organe de déplacement (90) du tensionneur inférieur (72B) ou/et du tensionneur supérieur (72A) ou pour modifier le couple de retenue appliqué sur l'organe de déplacement (90) du tensionneur supérieur (72A) ou/et du tensionneur inférieur (72B), sans déplacement de l'organe de déplacement (90) du tensionneur supérieur (72A) ou/et du tensionneur inférieur (72B).

13. Système selon la revendication 12, dans lequel lors de chaque intervalle de régulation (174), l'unité de commande (19) est propre à activer le moteur (110) d'au moins un tensionneur inférieur (72B) pour engendrer un déplacement d'un organe de déplacement (90) du tensionneur inférieur (72B) ou une modification du couple de retenue appliqué sur l'organe de déplacement (90) du tensionneur inférieur (72B) sans déplacement du tensionneur inférieur (72B), le moteur (110) de chaque tensionneur supérieur (72A) étant activé pour appliquer sur l'organe de déplacement (90) du tensionneur supérieur (72A) un couple de retenue de la ligne (12) à l'encontre de son poids sans déplacement de l'organe de déplacement (90) du tensionneur supérieur (72A).

14. Système selon la revendication 12, dans lequel le dispositif de pose comporte au moins un frein mécanique (114) propre à immobiliser mécaniquement au moins un moteur (110) d'un tensionneur supérieur (72A), activable par l'unité de commande (19), l'unité de commande (19) étant propre lors de chaque phase d'immobilisation, à appliquer en permanence le frein mécanique (114) sur au moins un tensionneur supérieur (72A) pour immobiliser le tensionneur supérieur (72A) et, lors de chaque intervalle de régulation (174), à activer le moteur (110) d'au moins un tensionneur inférieur (72B) pour engendrer un déplacement d'un organe de déplacement (90) du tensionneur inférieur (72B) ou à modifier le couple de retenue appliqué sur l'organe de déplacement (90) du tensionneur inférieur (72B) sans déplacement du tensionneur inférieur (72B) ;
ou dans lequel le dispositif de pose comporte au moins un frein mécanique (114) propre à immobiliser mécaniquement au moins un moteur (110) d'un tensionneur inférieur (72B), activable par l'unité de commande (19), l'unité de commande (19) étant propre lors de chaque phase d'immobilisation, à appliquer en permanence le frein mécanique (114) sur au moins un tensionneur inférieur (72B) pour immobiliser le tensionneur inférieur (72B) et, lors de chaque intervalle de régulation (174), à activer le moteur (110) d'au moins un tensionneur supérieur (72A) pour engendrer un déplacement d'un organe de déplacement (90) du tensionneur supérieur (72A) ou à modifier le couple de retenue appliqué sur l'organe de déplacement (90) du tensionneur supérieur (72A) sans déplacement du tensionneur supérieur (72A).

15. Système (10) selon l'une quelconque des revendications 10 à 14 comprenant au moins un capteur (76) de mesure d'une information représentative d'une différence entre la charge appliquée sur au moins un tensionneur supérieur (72A) et la charge appliquée sur au moins un tensionneur inférieur (72B), l'unité de commande (19) étant propre à piloter le moteur (110) de déplacement d'un organe de déplacement (90) du tensionneur inférieur (72B) ou/et du tensionneur supérieur (72A) lors de chaque intervalle de régulation (174) en fonction de l'information représentative.

## Patentansprüche

1. Verfahren zum Verlegen oder/und Einholen einer flexiblen Leitung (12) in einem Gewässer (11), umfassend:
- Bereitstellen einer Verlegevorrichtung (18), umfassend ein Paar obere Spanner (72A) und ein Paar untere Spanner (72B), wobei jedes Paar Spanner (72A; 72B) einen Durchgang (73) für den Umlauf der Leitung (12) definiert, in dem die Leitung (12) lokal eingeklemmt wird; wobei jeder Spanner (72A; 72B) ein Element (90) zum Bewegen der Leitung (12) und mindestens einen Motor (110) zum Bewegen des Bewegungselements (90) umfasst, der aktiviert werden kann, um ein Drehmoment zum Bewegen der Leitung (12) zu entwickeln;
- eine Einheit (19) zum Steuern von jedem Motor (110),
das Verfahren umfassend:
mindestens eine Verlege- und/oder Einholphase, in der die Steuereinheit (19) den Motor (110) mindestens eines Spanners (72A; 72B) aktiviert und ein Bewegungsmoment entwickelt, das eine kontinuierliche Bewegung der Leitung (12) durch jeden Umlaufdurchgang (73) erzeugt;
- mindestens eine Quasiimmobilisierungs- oder Immobilisierungsphase der Leitung;
**dadurch gekennzeichnet, dass** die oder jede Quasiimmobilisierungs- oder Immobilisierungsphase der Leitung die folgenden Schritte umfasst:
- Aktivieren des Motors von mindestens einem oberen Spanner (72A) und/oder mindestens einem unteren Spanner (72B) durch die Steuereinheit (19), um auf das Bewegungselement des oberen Spanners (72A) und/oder des unteren Spanners (72B) ein Rückhaltemoment der Leitung (12) gegen ihr Gewicht durch das Paar oberer Spanner (72A) oder/und durch das Paar unterer Spanner (72B) zu übertragen,
- zumindest punktuelles Ansteuern mindestens eines Motors (110) eines oberen Spanners (72A) und/oder eines unteren Spanners (72B) durch die Steuereinheit (19), um eine Bewegung eines Bewegungselements (90) des oberen Spanners (72A) und/oder des unteren Spanners (72B) zu erzeugen oder um das auf das Bewegungselement (90) des oberen Spanners (72A) oder/und des unteren Spanners (72B) ausgeübte Rückhaltemoment ohne Bewegung des Bewegungselements (90) des oberen Spanners (72A) oder/und des unteren Spanners (72B) zu verändern.

2. Verfahren nach Anspruch 1, umfassend mindestens eine Quasiimmobilisierungsphase der Leitung (12), in der die Steuereinheit (19) gleichzeitig mindestens einen Motor (110) eines oberen Spanners (72A) und mindestens einen Motor (110) eines unteren Spanners (72B) steuert, um eine kontinuierliche Bewegung der Bewegungselemente (90) der Leitung (12) zu erzeugen, die eine kontinuierliche Bewegung der Leitung (12) durch jeden Durchgang (73) mit einer Geschwindigkeit von weniger als 1 m/Stunde bewirkt.

3. Verfahren nach Anspruch 2, wobei in der Verlege- und/oder Einholphase der Leitung (12) die kontinuierliche Bewegung der Leitung (12) höher als 1,5 m/Stunde ist.

4. Verfahren nach Anspruch 2 oder 3, wobei die gleichzeitige Ansteuerung mindestens eines Motors (110) eines oberen Spanners (72A) und mindestens eines Motors (110) eines unteren Spanners (72B), um eine kontinuierliche Bewegung der Bewegungselemente (90) der Leitung (12) zu erzeugen, eine Messung von Informationen, die repräsentativ für eine Differenz zwischen der Last des oberen Spanners (72A) und der Last des unteren Spanners (72B) sind, und die selektive Steuerung von mindestens einem Motor (110) eines oberen Spanners (72A) und mindestens einem Motor (110) eines unteren Spanners (72B) abhängig von der gemessenen Lastdifferenz umfasst.

5. Verfahren nach einem der vorherigen Ansprüche, mindestens umfassend eine Immobilisierungsphase der Leitung (12), die Immobilisierungsphase der Leitung (12) umfassend eine Abfolge von Halteintervallen (172) der Leitung (12), in denen die Motoren (110) mindestens eines oberen Spanner (72A) und eines unteren Spanners (72B) das Rückhaltemoment ohne Bewegung eines Bewegungselements (90) auf die Leitung (12) übertragen, und von Regulierungsintervallen (174) der Last, in denen ein Motor (110) eines oberen Spanners (72A) oder eines oberen Spanners (72A) aktiv ist, um eine Bewegung eines Bewegungselements (90) des unteren Spanners (72B) und/oder des oberen Spanners (72A) zu erzeugen, oder eine Änderung des auf das Bewegungselement (90) des oberen Spanners (72A) oder/und des unteren Spanners (72B) ausgeübten Haltemoments ohne Bewegung des Bewegungselements (90) des oberen Spanners (72A) oder/und des unteren Spanners (72B) zu bewirken.

6. Verfahren nach Anspruch 5, wobei in jedem Regulierungsintervall (174) der Motor (110) von mindestens einem unteren Spanner (72B) aktiviert wird, um ohne Bewegung des unteren Spanners (72B) eine Bewegung eines Bewegungselements (90) des unteren Spanners (72B) oder eine Änderung des auf das Bewegungselement (90) des unteren Spanners (72B) ausgeübten Rückhaltemoments zu bewirken, wobei der Motor (110) von jedem oberen Spanner (72A) aktiviert wird, um ohne Bewegung des Bewegungselements (90) des oberen Spanners (72A) ein Rückhaltemoment der Leitung (12) gegen ihr Gewicht auf das Bewegungselement (90) des oberen Spanners (72A) zu übertragen.

7. Verfahren nach Anspruch 5, wobei während der Immobilisierungsphase (174) eine mechanische Bremse permanent auf mindestens einen oberen Spanner (72A) angewendet wird, um den oberen Spanner (72A) zu immobilisieren, und wobei während jedes Regulierungsintervalls (174) der Motor (110) von mindestens einem unteren Spanner (72B) aktiviert wird, eine Bewegung eines Bewegungselements (90) des unteren Spanners (72B) oder eine Änderung des auf das Bewegungselement (90) des unteren Spanners (72B) ausgeübten Drehmoments ohne Bewegung des unteren Spanners (72B) zu erzeugen,
oder wobei während der Immobilisierungsphase (174) eine mechanische Bremse permanent an mindestens einen unteren Spanner (72B) angelegt wird, um den unteren Spanner (72B) zu immobilisieren, und wobei während jedes Regulierungsintervalls (174) der Motor (110) von mindestens einem oberen Spanner (72A) aktiviert wird, um eine Bewegung eines Bewegungselements (90) des oberen Spanners (72A) oder eine Änderung des auf das Bewegungselement (90) des oberen Spanners (72A) ausgeübten Drehmoments ohne Bewegung des oberen Spanners (72A) zu erzeugen.

8. Verfahren nach einem der Ansprüche 5 bis 7, umfassend das Messen von Informationen, die repräsentativ sind für eine Differenz zwischen der ausgeübten Last auf mindestens einen oberen Spanner (72A) und der ausgeübten Last auf mindestens einen unteren Spanner (72B), die Bewegung eines Bewegungselements (90) des unteren Spanners (72B) und/oder des oberen Spanners (72A) durch den Motor (110) während jedes Regulierungsintervalls (174) oder das auf das Bewegungselement (90) des unteren Spanners (72B) oder/und des oberen Spanners (72A) ausgeübte Drehmoment durch den Motor (110) in jedem Regulierungsintervall (174) abhängig von den repräsentativen Informationen gesteuert wird.

9. Verfahren nach Anspruch 7 oder 8, wobei die Bewegung eines Bewegungselements (90) des unteren Spanners (72B) oder/und des oberen Spanners (72A) durch den Motor (110) während jedes Regulierungsintervalls (174) oder die Änderung des auf das Bewegungselement (90) des oberen Spanners (72A) oder/und des unteren Spanners (72B) ausgeübten Rückhaltemoments durchgeführt werden, wenn die Differenz der Last einen ersten vordefinierten Schwellenwert überschreitet, und angehalten wird. wenn die Differenz der Last unter einen zweiten vordefinierten Schwellenwert fällt, der vorteilhafterweise kleiner als oder gleich wie der erste vordefinierte Schwellenwert ist.

10. System (10) zum Verlegen oder/und Einholen einer flexiblen Leitung (12) in einem Gewässer (11), umfassend:
- eine Verlegevorrichtung (18), umfassend ein Paar oberer Spanner (72A) und ein Paar unterer Spanner (72B), wobei jedes Paar Spanner (72A; 72B) einen Umlaufdurchgang (73) der Leitung (12) definiert, in dem die Leitung (12) lokal eingeklemmt ist;
jede Spanner (72A; 72B) umfassend ein Bewegungselement (90) der Leitung (12) und mindestens einen Motor (110) zum Inbewegungsetzen des Bewegungselements (90), der aktiviert werden kann, um ein Bewegungsdrehmoment der Leitung (12) zu entwickeln;
- eine Steuereinheit von jedem Motor (110), die zur Ausführung von Folgendem geeignet ist:
- mindestens eine Verlege- und/oder Einholphase, in der die Steuereinheit den Motor (110) mindestens eines Spanners (72A; 72B) aktiviert und ein Bewegungsmoment entwickelt, das eine kontinuierliche Bewegung der Leitung (12) durch jeden Umlaufdurchgang (73) erzeugt;
- mindestens eine Quasiimmobilisierungs- oder Immobilisierungsphase der Leitung (12); **dadurch gekennzeichnet, dass** während der oder jeder Quasiimmobilisierungs- oder Immobilisierungsphase der Leitung (12) die Steuereinheit zu Folgendem geeignet ist:
- Aktivieren eines Motors (110) von mindestens einem oberen Spanner (72A) und/oder mindestens einem unteren Spanner (72B), um auf das Bewegungselement (90) des oberen Spanners (72A) und/oder des unteren Spanners (72B) ein Rückhaltemoment der Leitung (12) gegen ihr Gewicht durch das Paar von oberen Spannern (72A) oder/und durch das Paar von unteren Spannern (72B) zu übertragen,
- Steuern, zumindest punktuell, mindestens eines Motors (110) eines oberen Spanners (72A) und/oder eines unteren Spanners (72B), um eine Bewegung eines Bewegungselements (90) des oberen Spanners (72A) und/oder des unteren Spanners (72B) zu erzeugen oder um das auf das Bewegungselement (90) des oberen Spanners (72A) oder/und des unteren Spanners (72B) ausgeübte Rückhaltemoment ohne Bewegung des Bewegungselements (90) des oberen Spanners (72A) oder/und des unteren Spanners (72B) zu ändern.

11. System (10) nach Anspruch 10, wobei die Steuereinheit (19) geeignet ist, um eine Quasiimmobilisierungsphase der Leitung (12) auszuführen, in der die Steuereinheit (19) gleichzeitig mindestens einen Motor (110) eines oberen Spanners (72A) und einen Motor (110) eines unteren Spanners (72B) steuert, um eine kontinuierliche Bewegung der Bewegungselemente (90) der Leitung (12) zu erzeugen, die eine kontinuierliche Bewegung der Leitung (12) durch jeden Umlaufdurchgang (73) mit einer Geschwindigkeit von weniger als 1 m/Stunde bewirkt.

12. System (10) nach Anspruch 10, wobei die Steuereinheit (19) geeignet ist, um mindestens eine Immobilisierungsphase der Leitung (12) auszuführen, die Immobilisierungsphase der Leitung (12) umfassend eine Abfolge von Intervallen (172), um die Leitung (12) immobilisiert zu halten, in denen die Motoren (110) mindestens eines oberen Spanner (72A) und eines unteren Spanners (72B) das Rückhaltemoment ohne Bewegung eines Rückhalteelements (190) auf die Leitung (12) übertragen, und von Regulierungsintervallen (174) der Last, in denen ein Motor (110) eines oberen Spanners (72A) oder eines oberen Spanners (72A) aktiv ist, um eine Bewegung eines Bewegungselements (90) des unteren Spanners (72B) und/oder des oberen Spanners (72A) zu erzeugen, oder um das auf das Bewegungselement (90) des oberen Spanners (72A) oder/und des unteren Spanners (72B) ausgeübte Haltemoment ohne Bewegung des Bewegungselements (90) des oberen Spanners (72A) oder/und des unteren Spanners (72B) zu ändern.

13. System nach Anspruch 12, wobei die Steuereinheit (19) während jedes Regulierungsintervalls (174) geeignet ist, um den Motor (110) mindestens eines unteren Spanners (72B) zu aktivieren, um eine Bewegung eines Bewegungsorgans (90) des unteren Spanners (72B) oder eine Änderung des auf das Bewegungsorgan (90) des unteren Spanners (72B) ausgeübten Rückhaltemoments ohne Bewegung des unteren Spanners (72B) zu bewirken, wobei der Motor (110) von jedem oberen Spanner (72A) aktiviert wird, um ohne Bewegung des Bewegungselements (90) des oberen Spanners (72A) ein Rückhaltemoment der Leitung (12) gegen ihr Gewicht auf das Bewegungselement (90) des oberen Spanners (72A) zu übertragen.

14. System nach Anspruch 12, wobei die Verlegevorrichtung mindestens eine mechanische Bremse (114) umfasst, die geeignet ist, um mindestens einen Motor (110) eines oberen Spanners (72A) mechanisch zu immobilisieren, der durch die Steuereinheit (19) aktiviert werden kann, wobei die Steuereinheit (19) während jeder Immobilisierungsphase geeignet ist, um die mechanische Bremse (114) permanent auf mindestens einen oberen Spanner (72A) anzuwenden, um den oberen Spanner (72A) zu immobilisieren, und während jedes Regulierungsintervalls (174) den Motor (110) von mindestens einem unteren Spanner (72B) zu aktivieren, um eine Bewegung eines Bewegungselements (90) des unteren Spanners (72B) zu bewirken oder das auf das Bewegungselement (90) des unteren Spanners (72B) ausgeübte Rückhaltemoment ohne Bewegung des unteren Spanners (72B) zu ändern;
oder wobei die Verlegevorrichtung mindestens eine mechanische Bremse (114) umfasst, die geeignet ist, um mindestens einen Motor (110) eines unteren Spanners (72B) mechanisch zu immobilisieren, der durch die Steuereinheit (19) aktiviert werden kann, wobei die Steuereinheit (19) während jeder Immobilisierungsphase geeignet ist, um die mechanische Bremse (114) permanent auf mindestens einen unteren Spanner (72B) anzuwenden, um den unteren Spanner (72B) zu immobilisieren, und während jedes Regulierungsintervalls (174) den Motor (110) von mindestens einem oberen Spanner (72A) zu aktivieren, um eine Bewegung eines Bewegungselements (90) des oberen Spanners (72A) zu bewirken oder das auf das Bewegungselement (90) des oberen Spanners (72A) ausgeübte Rückhaltemoment ohne Bewegung des oberen Spanners (72A) zu ändern;

15. System (10) nach einem der Ansprüche 10 bis 14, umfassend mindestens einen Sensor (76) zum Messen von Informationen, die repräsentativ sind für eine Differenz zwischen der ausgeübten Last auf mindestens einen oberen Spanner (72A) und der ausgeübten Last auf mindestens einen unteren Spanner (72B), wobei die Steuereinheit (19) geeignet ist, um den Motor (110) zur Bewegung eines Bewegungsorgans (90) des unteren Spanners (72B) oder/und des oberen Spanners (72A) während jedes Regulierungsintervalls (174) abhängig von den repräsentativen Informationen zu steuern.

## Claims

1. A method for laying and/or recovering a flexible line (12) in a body of water (11), comprising:
- provision of a laying device (18) comprising a pair of upper tensioners (72A) and a pair of lower tensioners (72B), each pair of tensioners (72A; 72B) defining a passage (73) for circulation of the line (12) in which the line (12) is locally clamped; each tensioner (72A; 72B) comprising a member (90) for moving the line (12) and at least one motor (110) for setting the movement member (90) in motion, operable to deliver a torque for moving the line (12);
- a control unit (19) for each motor (110),
the method comprising:
at least one laying and/or recovery phase in which the control unit (19) activates the motor (110) of at least one tensioner (72A; 72B) and delivers a movement torque generating a continuous movement of the line (12) through each circulation passage (73);
- at least one phase of near-immobilization or immobilization of the line;
**characterized in that** the or each phase of near-immobilization or immobilization of the line comprises the following steps:
- activating the motor of at least one upper tensioner (72A) and/or at least one lower tensioner (72B) by the control unit (19), in order to apply to the movement member of the upper tensioner (72A) and/or of the lower tensioner (72B) a torque for holding the line (12) against its weight by the pair of upper tensioners (72A) and/or by the pair of lower tensioners (72B),
- at least occasional control by the control unit (19) of at least one motor (110) of an upper tensioner (72A) and/or of a lower tensioner (72B) for causing a movement member (90) of the upper tensioner (72A) and/or the lower tensioner (72B) to move or for changing the holding torque applied to the movement member (90) of the upper tensioner (72A) and/or of the lower tensioner (72B) without moving the movement member (90) of the upper tensioner (72A) and/or lower tensioner (72B).

2. A method according to claim 1, comprising at least one phase of near-immobilization of the line (12) in which the control unit (19) simultaneously controls at least one motor (110) of an upper tensioner (72A) and at least one motor (110) of a lower tensioner (72B) to generate a continuous movement of the movement members (90) of the line (12), causing a continuous movement of the line (12) through each circulation passage (73) at a speed of less than 1 m/hour.

3. A method according to claim 2, wherein in the phase of laying and/or recovering the line (12), the continuous movement of the line (12) is greater than 1.5 m/hour.

4. A method according to claim 2 or 3, wherein the simultaneous control of at least one motor (110) of an upper tensioner (72A) and at least one motor (110) of a lower tensioner (72B) to generate a continuous movement of the movement members (90) of the line (12) comprises the measuring of information representative of a difference between the load applied to at least one upper tensioner (72A) and the load applied to at least one lower tensioner (72B) and selectively controlling at least one motor (110) of an upper tensioner (72A) and at least one motor (110) of a lower tensioner (72B) as a function of the measured load difference.

5. A method according to any of the preceding claims, comprising at least one phase of immobilizing the line (12), the phase of immobilizing the line (12) comprising a succession of intervals of holding (172) the line (12) immobile in which the motors (110) of at least one upper tensioner (72A) and of at least one lower tensioner (72B) apply the holding torque to the line (12) without moving a movement member (90), and load regulation intervals (174) in which a motor (110) of an upper tensioner (72A) or of a lower tensioner (72A) is active in order to cause a movement member (90) of the lower tensioner (72B) and/or the upper tensioner (72A) to move or to cause the holding torque applied to the movement member (90) of the upper tensioner (72A) and/or the lower tensioner (72B) to change without movement of the movement member (90) of the upper tensioner (72A) and/or lower tensioner (72B).

6. A method according to claim 5, wherein during each regulation interval (174), the motor (110) of at least one lower tensioner (72B) is activated to cause a movement member (90) of the lower tensioner (72B) to move or the holding torque applied to the movement member (90) of the lower tensioner (72B) to change without movement of the lower tensioner (72B), the motor (110) of each upper tensioner (72A) being activated to apply to the movement member (90) of the upper tensioner (72A) a holding torque to hold the line (12) against its weight without moving the movement member (90) of the upper tensioner (72A).

7. A method according to claim 5, wherein during the immobilization phase (174) a mechanical brake is constantly applied to at least one upper tensioner (72A) to immobilize the upper tensioner (72A), and wherein during each regulation interval (174) the motor (110) of the at least one lower tensioner (72B) is activated to cause a movement member (90) of the lower tensioner (72B) to move or cause the torque applied to the movement member (90) of the lower tensioner (72B) to change without moving the lower tensioner (72B),
or wherein, during the immobilization phase (174), a mechanical brake is constantly applied to at least one lower tensioner (72B) to immobilize the lower tensioner (72B), and wherein during each regulation interval (174), the motor (110) of the at least one upper tensioner (72A) is activated to cause a movement member (90) of the upper tensioner (72A) to move or cause the torque applied to the movement member (90) of the upper tensioner (72A) to change without moving the upper tensioner (72A),

8. A method according to any one of claims 5 to 7, comprising the measuring of information representative of a difference between the load applied to at least one upper tensioner (72A) and the load applied to at least one lower tensioner (72B), the movement of a movement member (90) of the lower tensioner (72B) and/or upper tensioner (72A) by the motor (110) during each control interval (174), or the torque applied to the movement member (90) of the lower tensioner (72B) and/or the upper tensioner (72A) by the motor (110) during each regulation interval (174) being controlled as a function of the representative information.

9. A method according to claim 7 or 8, wherein the movement of a movement member (90) of the lower tensioner (72B) and/or the upper tensioner (72A) by the motor (110) during each regulation interval (174) or the change of the holding torque applied to the movement member (90) of the upper tensioner (72A) and/or the lower tensioner (72B) is carried out when the difference in load exceeds a first predefined threshold and is stopped when the difference in load falls below a second predefined threshold, advantageously lower than or equal to the first predefined threshold.

10. A system (10) for laying and/or recovering a flexible line (12) in a body of water (11), comprising:
- a laying device (18) comprising a pair of upper tensioners (72A) and a pair of lower tensioners (72B), each pair of tensioners (72A; 72B) defining a circulation passage (73) of the line (12) in which the line (12) is locally clamped;
each tensioner (72A; 72B) comprising a movement member (90) for moving the line and at least one motor (110) for setting the movement member (90) in motion, which can be activated to deliver a movement torque for the line (12);
- a control unit for each motor (110), able to carry out:
at least one laying and/or recovery phase in which the control unit activates the motor (110) of at least one tensioner (72A; 72B) and delivers a movement torque generating a continuous movement of the line (12) through each circulation passage (73);
- at least one phase of near-immobilization or immobilization of the line (12);
**characterized in that**, during the or each phase of near-immobilization or immobilization of the line (12), the control unit is suitable to:
- activate a motor (110) of at least one upper tensioner (72A) and/or at least one lower tensioner (72B), in order to apply to the movement member (90) of the upper tensioner (72A) and/or of the lower tensioner (72B) a torque for holding the line (12) against its weight by the pair of upper tensioners (72A) and/or by the pair of lower tensioners (72B),
- at least occasionally control at least one motor (110) of an upper tensioner (72A) and/or of a lower tensioner (72B) for causing a movement member (90) of the upper tensioner (72A) and/or the lower tensioner (72B) to move or for changing the holding torque applied to the movement member (90) of the upper tensioner (72A) and/or of the lower tensioner (72B) without moving the movement member (90) of the upper tensioner (72A) and/or lower tensioner (72B).

11. A system (10) according to claim 10, wherein the control unit (19) is capable of carrying out a phase of near-immobilization of the line (12) in which the control unit (19) simultaneously controls at least one motor (110) of an upper tensioner (72A) and at least one motor (110) of a lower tensioner (72B) to generate a continuous movement of the movement members (90) of the line (12), causing a continuous movement of the line (12) through each circulation passage (73) at a speed of less than 1 m/hour.

12. A system (10) according to claim 10, wherein the control unit (19) is able to carry out at least one phase of immobilizing the line (12), the phase of immobilizing the line (12) comprising a succession of intervals (172) of keeping the line (12) immobile in which the motors (110) of at least one upper tensioner (72A) and of at least one lower tensioner (72B) apply the holding torque to the line (12) without moving a holding member (190), and load regulation intervals (174) in which a motor (110) of an upper tensioner (72A) or of a lower tensioner (72A) is active in order to cause a movement member (90) of the lower tensioner (72B) and/or the upper tensioner (72A) to move or to cause the holding torque applied to the movement member (90) of the upper tensioner (72A) and/or the lower tensioner (72B) to change without movement of the movement member (90) of the upper tensioner (72A) and/or lower tensioner (72B).

13. A system according to claim 12, wherein during each regulation interval (174), the control unit (19) is able to activate the motor (110) of at least one lower tensioner (72B) to cause a movement member (90) of the lower tensioner (72B) to move or the holding torque applied to the movement member (90) of the lower tensioner (72B) to change without movement of the lower tensioner (72B), the motor (110) of each upper tensioner (72A) being activated to apply to the movement member (90) of the upper tensioner (72A) a holding torque to hold the line (12) against its weight without moving the movement member (90) of the upper tensioner (72A).

14. A system according to claim 12, in which the laying device comprises at least one mechanical brake (114) capable of mechanically immobilizing at least one motor (110) of an upper tensioner (72A), which can be activated by the control unit (19), the control unit (19) being capable, during each immobilization phase, of constantly applying the mechanical brake (114) to at least one upper tensioner (72A) in order to immobilize the upper tensioner (72A), and during each regulation interval (174), to activate the motor (110) of at least one lower tensioner (72B) to cause a movement member (90) of the lower tensioner (72B) to move or cause the holding torque applied to the movement member (90) of the lower tensioner (72B) to change without moving the lower tensioner (72B);
or wherein the laying device comprises at least one mechanical brake (114) capable of mechanically immobilizing at least one motor (110) of a lower tensioner (72B), which can be activated by the control unit (19), the control unit (19) being capable, during each immobilization phase, of constantly applying the mechanical brake (114) to at least one lower tensioner (72B) in order to immobilize the lower tensioner (72B), and during each regulation interval (174), to activate the motor (110) of at least one upper tensioner (72A) to cause a movement member (90) of the upper tensioner (72A) to move or cause the holding torque applied to the movement member (90) of the upper tensioner (72A) to change without moving the upper tensioner (72A).

15. A system (10) according to any one of claims 10 to 14 comprising at least one sensor (76) for the measuring of information representative of a difference between the load applied to at least one upper tensioner (72A) and the load applied to at least one lower tensioner (72B) the control unit (19) being suitable for controlling the motor (110) for moving a movement member (90) of the lower tensioner (72B) and/or upper tensioner (72A) during each regulation interval (174) as a function of the representative information.
